# EUROPEAN PATENT SPECIFICATION

(11) **EP 2 362 827 B1**
(45) Date of publication and mention of the grant of the patent: **20.04.2016**
(21) Application number: 09752348.4
(22) Date of filing: 11.11.2009
(51) Int. Cl.: B29C 70/54, G01N 21/00, B29C 70/38, B29C 70/30

(54) **METHOD AND SYSTEM FOR MONITORING AND CONTROLLING THE MANUFACTURING OF PARTS FOR A WIND POWER PLANT**
VERFAHREN UND SYSTEM ZUR ÜBERWACHUNG UND STEUERUNG DER HERSTELLUNG VON TEILEN FÜR EINE WINDENERGIEANLAGE
PROCÉDÉ ET SYSTÈME DE SURVEILLANCE ET DE GESTION DE LA FABRICATION DE PIÈCES DESTINÉES À UNE CENTRALE ÉOLIENNE

(30) Priority: 12.11.2008 DK 200801566
(43) Date of publication of application: 07.09.2011
(73) Proprietor: LM WP Patent Holding A/S, 6000 Kolding (DK)
(72) Inventor: BØRSTING, Dennis André, DK-6000 Kolding (DK); ZHOU, Qinyin, DK-5792 Årslev (DK); VAN DER ZEE, Jacobus Johannes, DK-6000 Kolding (DK)
(74) Representative: Hussey, Paul Anthony
(86) International application number: PCT/EP2009/064992
(87) International publication number: WO 2010/055059

(56) References cited:
- EP-A1- 0 128 826
- EP-A1- 0 470 901
- EP-A2- 1 749 642
- BUCKINGHAM R O ET AL: "AUTOMATING THE MANUFACTURE OF COMPOSITE BROADGOODS" COMPOSITES, IPC BUSINESS PRESS LTD. HAYWARDS HEATH, GB, vol. 27A, no. 3, 1 March 1996 (1996-03-01) , pages 191-200, XP000587319 ISSN: 0010-4361
- ANONYMOUS: "UNOFFICIAL DRAFT OF RECOMMENDATION FOR REVIEW USE ONLY , PAGE 22 AND PAGE 63 U" INTERNET CITATION 22 August 2003 (2003-08-22), XP002413118 Retrieved from the Internet: URL:http://www.niar.wichita.edu/faa/FAALRM /Draft%20Fabric%20Specification %20Document/Fabric%20Prepreg%20Material%20 Control%20Draft%20v5a%20for %20review.pdf> [retrieved on 2007-01-04]

## Description

### Background to the invention

The present invention relates to a method for manufacturing of a fibre-reinforced part for a wind power plant (including) monitoring and controlling that a plurality of layers of material comprising fibre for the manufacturing of said part are located correctly in a mould for said part and/or correctly relative to each other in said mould. The present invention also relates to a system which is used for carrying through said method.

In the context of manufacturing fibre-reinforced parts, such as blades for wind power plants, a manufacturing process is typically employed in which the part is moulded in two halves in each their open mould, wherein a coat, e.g. a gelcoat, is initially applied onto the interior surface of the open mould.

A number of layers of fibre material are subsequently arranged in the mould, typically by hand, following which resin is finally applied to attach the individual layers of fibre material to each other. The resin can be applied to the layers manually by RTM (resin transfer moulding), VARTM (vacuum assisted resin transfer moulding) or other suitable methods. Alternatively, the resin can be applied to the laminate layers (Prepeg). In the context of this, gelcoat will harden and form the surface of the product.

Arranging the layers of fibre material in the mould is today a time-consuming and labour intensive process. Depending on the size of the part to be manufactured, walkways may be arranged alongside and/or above the mould such that the workers are allowed to walk along the edge or periphery of the mould and/or above the mould in order to arrange the layers of fibre material as required.

Multiple rolls of fibre material comprising different types of fibre material are arranged on the walkways, such that the workers may pick suitable rolls comprising the required materials and arrange the materials on the form.

During the layup of fibre material, combined efforts of several workers are required, as the fibre material is heavy and not easy manipulable. Some workers assist in the rollout of material, while other workers positioned along the edges of the mould make sure that the layers are laid up correctly.

Depending on the application and structure of the part to be manufactured, multiple layers of fibre material may be arranged in the mould and the layers are typically arranged on top of each other or next to each other or possibly with overlapping edges.

The parts typically consist of as many as fifty or more layers of fibre material and the parts are typically built up from a main laminate provided in the centre of the mould. Between the layers of fibre material there may also be provided layers of e.g. balsa wood for providing suitable distances between said layers of fibre material.

After a layer which is provided from a roll is located in the mould, the material is cut from the roll. Manufacturing of parts having curvature throughout the length of the part, such as a wing or blade for a wind power plant, may require very long cuts along the edges of the mould.

Moulds for manufacturing such parts may be very large and the moulds are as a consequence expensive. The time required for the arrangement of material in the mould should be kept at a minimum such that the form time (the time which a part occupies the mould) required by a part to be manufactured is kept at a minimum, thus increasing the overall productivity of the mould.

The fibre material is preferably arranged substantially even and flush, which is why any developed dents and curls etc. must be smoothed out. Further, as one layer is typically applied on top of a preceding layer, the lower layer as well as possible additional layers arranged below the lower layer tend to move or slide within the mould, causing the entire layup of fibre material to move away from an intended position in the mould. Also, as various types of layers of fibre material are often laid laterally displaced relative to lower layers according to certain predetermined specifications for the part to be manufactured, it is important for the stability of said part that all layers are correctly displaced in the mould as well as relative to each other and without dents and the like.

Document EP1749642 discloses a method and the related system for manufacturing a fibre-reinforced part including monitoring and controlling that a plurality of layers of material comprising fibre for the manufacturing of said part are located correctly in a mould for said part and/or correctly relative to each other in said mould, wherein after having provided each layer of fibre material with at least one electronically identifiable tag and while locating the layers of fibre material on top of each other or next to each other or with overlapping edges in the mould, the position of the layers is detected and eventually corrected.

### Brief summary of the invention

The object of the present invention is accordingly to provide a method and system for facilitating and accelerating the manufacturing of parts for a wind power plant, such as a blade therefore, by having a better and more reliable control over the process of how the layers of material are located and corrected if not located properly.

This is arrived at according to the invention as claimed in claim 1.

The system according to the invention is disclosed in claim 14.

Other objects and advantages of the invention will be apparent to one skilled in the art who examines the attached drawings and the following detailed description of preferred embodiments.

### Brief description of the drawing

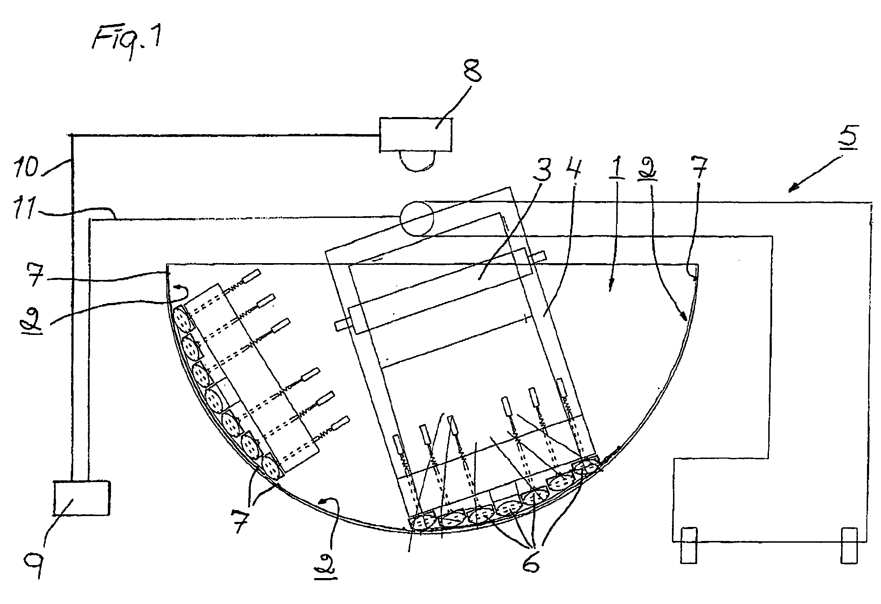

Fig. 1 is a schematic sectional view of a part of an open mould for moulding a part for a wind power plant, said mould being provided with a system according to the present invention.

### Detailed description of a preferred embodiment of the invention

Thus, fig. 1 is a sectional view of an open mould 1 which as illustrated accommodates a plurality of layers 2 of material comprising fibre for manufacturing a fibre-reinforced part for a wind power plant, e.g. a blade for said wind power plant. The layers 2 are illustrated as having a width or breadth corresponding substantially to one quarter of the breadth of the curved interior surface of the mould 1 and they are located next to each other. The layers 2 could however equally have been located on top of each other or with overlapping edges.

The mould 1 is typically an elongated mould having a length corresponding substantially to the length of the part to be manufactured from, inter alia, the layers 2.

The layers 2 may constitute pre-cut pieces intended for a particular site of application in the mould 1 and the pieces are rolled onto a roll 3. Further, the fibre material may simply constitute an endless length of material being rolled onto a roll 3 which, when arranged in or on the mould 1, is cut from the roll.

The roll 3 is as illustrated mounted on the frame 4 of a movable device 5 for locating the layers 2 of fibre material in the mould 1, said device thereby further comprising a number of adjustable press rolls 6. The construction and function of said movable device 5 do not form part of the present invention and will therefore not be further described here.

As stated above and with further reference to the drawing, the present invention relates to a method and a system for monitoring and controlling that said plurality of layers 2 of fibre material for manufacturing said part of the wind power plant are located correctly in the mould 1 for said part and/or correctly relative to each other in said mould. This is done simultaneously with the manufacturing of said part, i.e. while one layer 2 after the other of said fibre material is located in the mould 1. This means that each new layer 2 is monitored and controlled continuously during location thereof in the mould 1 and/or after said location thereof in the mould.

The layers 2 of fibre material used in the method and at the system according to the present invention are all provided with at least one marking 7 of a suitable type. The markings 7 can be provided when the layers 2 of fibre material are manufactured, at the manufacturer, or just before the location thereof in a mould 2. The markings 7 can also be provided on the rolls of fibre material from which the layers 2 are cut. The markings 7, which are provided adjacent one or, as illustrated, both the longitudinal edges of each layer 2 of fibre material, may be provided thereon e.g. by printing or spraying and are thereby be designed as one or more broken or solid lines, eventually also in different colours. The markings 7 may alternatively be made e.g. of threads which are woven into the fibre material of said layers 2. Common to all types of markings 7 however, is that they must be detectable by suitable means such that their positions in the mould 1 and/or relative to each other can be determined.

The layers 2 of fibre material, provided with markings 7 of a suitable type are as stated above located one by one on top of each other, next to each other as illustrated or with overlapping edges during manufacturing of the part to be manufactured. The markings 7 will thereby be positioned in accordance therewith.

In the method and at the system according to the present invention, the position of each marking 7 on each layer 2 of fibre material is determined during and/or after location of said layer in the mould 1. Accordingly, the procedure of determining the position of each marking 7 may be repeated one or more times for all layers 2 of fibre material such that the position of each layer 2 can be monitored continuously during and/or after location thereof in the mould 1. In the latter case eventually at the same time the next layer 2 of fibre material is located in the mould 1. The positions of the markings 7 in the mould 1 are determined. Alternatively, or as a complement to the above determination, the relative positions of the markings 7 on the different layers 2 of fibre material are determined. The positions of the markings 7 are determined e.g. as illustrated by means of a camera 8 or by means of a laser. With the camera 8, one or more pictures are taken for each new layer 2 of fibre material which is located in the mould 1. The pictures taken with the camera 8 can be used e.g. as subsequent documentation to the customer that the part to be manufactured in fact has been manufactured properly in the mould 1.

The determined position in the mould 1 of each marking 7 on each layer 2 of fibre material and/or the positions of the markings on different layers of fibre material relative to each other are then compared with predetermined reference positions for said markings for the part to be manufactured. This comparison is performed by means of e.g. a computer 9, in which said predetermined reference positions are stored. The computer 9 cooperates with the camera 8 or laser in a suitable manner, e.g. through a signal line 10, such that it continuously receives information about the determined actual positions of the markings 7 on the layers 2 of fibre material which are located in the mould 1 and/or of the positions of said markings on said different layers of fibre material relative to each other.

Finally, after said comparison of the determined positions of the markings 7 on the layers 2 of fibre material with said predetermined reference positions, correction of the position of that or those layers of fibre material for which the determined positions for the markings thereon and the predetermined reference positions for said markings do not correspond with each other, is performed. This correction can be performed in any suitable way with any appropriate means therefor. Appropriate means may e.g. be found on said device 5 for the initial location of the layers 2 of fibre material in the mould 1, might even consist of said device or apparatus, which then cooperates with the computer 9 through e.g. a signal line 11. As with the preceding steps of the method according to the present invention, correction can be performed either continuously, without interrupting the manufacturing of the part to be manufactured, or alternatively after first having interrupted said manufacturing.

The method described above can be performed manually or automatically.

It is obvious to a skilled person that the method and system according to the present invention can be modified or altered within the scope of the subsequent claims. Thus, all means, members or components mentioned above for determining the positions of the markings 7 on the layers 2 of fibre material, for comparing said determined positions of the markings with the predetermined reference positions for said markings and for performing correction of those layers of fibre material which are not properly located, can be replaced by other such means, members or components. Further, it is e.g. possible to perform, if not all the steps mentioned above, then at least one or more thereof without interrupting the manufacturing of the part to be manufactured, or to perform one or more of said steps while simultaneously locating the layers of fibre material, or to perform one or more steps automatically and other steps manually.

## Claims

1. A method for manufacturing a fibre-reinforced wind turbine blade including monitoring and controlling that a plurality of layers of material comprising fibre for the manufacturing of said wind turbine blade are located correctly in a mould for said part and/or correctly relative to each other in said mould, wherein the layers are provided to the mould from a roll (3), and wherein
, after having provided each layer (2) of fibre material with at least one marking (7) and while locating the layers of fibre material on top of each other or next to each other or with overlapping edges in the mould (1), the method comprises
determining the position in the mould (1) of each marking (7) on each layer (2) of fibre material and/or the positions of the markings on different layers of fibre material relative to each other,
comparing the determined position in the mould (1) of each marking (7) on each layer (2) of fibre material and/or the positions of the markings on said different layers of fibre material relative to each other with predetermined reference positions for said markings for the part to be manufactured, and
performing correction of the position of that or those layers (2) of fibre material for which the determined positions for the markings (7) thereon and the predetermined reference positions for said markings do not correspond with each other, **characterized in that** the markings (7) are provided as one or more broken or solid lines on the layers (2) of fibre material adjacent one of or both the longitudinal edges of each layer of material.

2. The method according to claim 1, **characterized by** performing said method with-out interrupting the manufacturing of the part to be manufactured.

3. The method according to claim 1, **characterized by** performing said method after interruption of the manufacturing of the part to be manufactured.

4. The method according to claim 2, **characterized by** performing said method continuously during and/or after location of each layer of fibre material.

5. The method according to claim 2 or 3, **characterized by** performing said method after location of each layer of fibre material.

6. The method according to any one of claims 1-5, **characterized by** performing said method automatically.

7. The method according to any one of claims 1-6, **characterized by** printing or spraying the markings (7) on the layers (2) of fibre material.

8. The method according to any of claims 1-7, **characterized by** designing the markings (7) on the layers (2) of fibre material as one or more broken or solid lines in different colours.

9. The method according to any one of claims 1-8, **characterized by** making the markings (7) on the layers (2) of fibre material of threads woven into the material of said layers.

10. The method according to any one of claims 1-9, **characterized by** determining the positions of the markings (7) on the layers (2) of fibre material by means of a camera (8).

11. The method according to any one of claims 1-9, **characterized by** determining the positions of the markings (7) on the layers (2) of fibre material by means of a laser.

12. The method according to any one of claim 1-11, **characterized by** comparing the determined positions of the markings (7) on the layers (2) of fibre material with the predetermined reference positions for said markings by means of a computer (9).

13. The method according to any one of claims 1-12, **characterized by** performing correction of the position of said layer or layers (2) of fibre material by means of an apparatus (5) for the initial location of the layers of fibre material in the mould (1).

14. A system for manufacturing of a fibre-reinforced wind turbine blade and for monitoring and controlling that a plurality of layers of material comprising fibre for the manufacturing of said part are located correctly in a mould for said part and/or correctly relative to each other in said mould,
wherein said system comprises, while each layer (2) of fibre material is provided with said at least one marking (7) and while the layers of fibre material are being located on top of each other or next to each other or with overlapping edges in the mould (1),
means (8) for determining the position in the mould (1) of each marking (7) on each layer (2) of fibre material and/or the positions of the markings on different layers of fibre material relative to each other,
means (9) for comparing the determined position in the mould (1) of each marking (7) on each layer (2) of fibre material and/or the positions of the markings on said different layers of fibre material relative to each other with predetermined reference positions for said markings for the part to be manufactured, and
means (5) for performing correction of the position of that or those layers (2) of fibre material for which the determined positions for the markings (7) thereon and the predetermined reference positions for said markings do not correspond with each other, **characterized in that** the system comprises means to apply the layers (2) of fibre material from a roll (3), wherein each layer (2) of fibre material is provided with at least one marking (7) provided as one or more broken or solid lines on the layers (2) of fibre material adjacent one of or both the longitudinal edges of each layer of material.

15. The system according to claim 14, **characterized in that** said means for deter-mining the positions of the markings (7) on the layers (2) of fibre material is a camera (8).

16. The system according to claim 14, **characterized in that** said means for deter-mining the positions of the markings (7) on the layers (2) of fibre material is a laser.

17. The system according to any one of claims 14-16, **characterized in that** said means for comparing the determined positions of the markings (7) on the layers (2) of fibre material with predetermined reference positions for said markings for the part to be manufactured is a computer (9).

18. The system according to any one of claims 14-17, **characterized in that** said means for performing correction of the position of that or those layers (2) of fibre material for which the determined positions for the markings (7) thereon and the predetermined reference positions for said markings do not correspond with each other, is an apparatus (5) by means of which the layers of fibre material are initially located in the mould (1).

## Patentansprüche

1. Verfahren zum Herstellen eines faserverstärkten Windkraftanlagenflügels, umfassend das Überwachen und Kontrollieren, dass mehrere Schichten von Fasern umfassenden Material für die Herstellung des Windkraftanlagenflügels korrekt in einem Formwerkzeug für das Teil und/oder korrekt relativ zueinander in dem Formwerkzeug positioniert sind, wobei die Schichten dem Formwerkzeug von einer Rolle (3) bereitgestellt werden, und wobei
das Verfahren, nachdem jede Schicht (2) von Fasermaterial mit mindestens einer Markierung (7) versehen wurde und während die Schichten von Fasermaterial übereinander oder nebeneinander oder mit überlappenden Rändern in dem Formwerkzeug (1) positioniert werden, Folgendes umfasst:
Bestimmen der Lage jeder Markierung (7) auf jeder Schicht (2) aus Fasermaterial in dem Formwerkzeug (1) und/oder der Lagen der Markierungen auf verschiedenen Schichten aus Fasermaterial relativ zueinander,
Vergleichen der bestimmten Lage jeder Markierung (7) auf jeder Schicht (2) aus Fasermaterial in dem Formwerkzeug (1) und/oder der Lagen der Markierungen auf den verschiedenen Schichten aus Fasermaterial relativ zueinander mit vorherbestimmten Bezugslagen für die Markierungen für das herzustellende Teil, und
Ausführen einer Korrektur der Lage derjenigen Schicht oder Schichten (2) aus Fasermaterial, für die die bestimmten Lagen für die Markierungen (7) darauf und die vorherbestimmten Bezugslagen für die Markierungen nicht miteinander übereinstimmen, **dadurch gekennzeichnet, dass** die Markierungen (7) als eine oder mehr gestrichelte oder durchgezogene Linien auf den Schichten (2) aus Fasermaterial benachbart einem oder beiden der Längsränder jeder Schicht aus Material bereitgestellt werden.

2. Verfahren nach Anspruch 1, **gekennzeichnet durch** das Ausführen des Verfahrens ohne die Herstellung des herzstellenden Teils zu unterbrechen.

3. Verfahren nach Anspruch 1, **gekennzeichnet durch** das Ausführen des Verfahrens nach dem Unterbrechen der Herstellung des herzstellenden Teils zu unterbrechen.

4. Verfahren nach Anspruch 2, **gekennzeichnet durch** das kontinuierliche Ausführen des Verfahrens während und/oder nach dem Positionieren jeder Schicht aus Fasermaterial.

5. Verfahren nach Anspruch 2 oder 3, **gekennzeichnet durch** das Ausführen des Verfahrens nach dem Positionieren jeder Schicht aus Fasermaterial.

6. Verfahren nach einem der Ansprüche 1-5, **gekennzeichnet durch** das automatische Ausführen des Verfahrens.

7. Verfahren nach einem der Ansprüche 1-6, **gekennzeichnet durch** das Drucken oder Sprühen der Markierungen (7) auf die Schichten (2) aus Fasermaterial.

8. Verfahren nach einem der Ansprüche 1-7, **gekennzeichnet durch** das Gestalten der Markierungen (7) auf den Schichten (2) aus Fasermaterial als eine oder mehr gestrichelte oder durchgezogene Linien in verschiedenen Farben.

9. Verfahren nach einem der Ansprüche 1-8, **gekennzeichnet durch** das Erzeugen der Markierungen (7) auf den Schichten (2) aus Fasermaterial aus in das Material der Schichten gewobenen Fäden.

10. Verfahren nach einem der Ansprüche 1-9, **gekennzeichnet durch** das Bestimmen der Lagen der Markierungen (7) auf den Schichten (2) aus Fasermaterial mittels einer Kamera (8).

11. Verfahren nach einem der Ansprüche 1-9, **gekennzeichnet durch** das Bestimmen der Lagen der Markierungen (7) auf den Schichten (2) aus Fasermaterial mittels eines Lasers.

12. Verfahren nach einem der Ansprüche 1-11, **gekennzeichnet durch** das Vergleichen der bestimmten Lagen der Markierungen (7) auf den Schichten (2) aus Fasermaterial mit den vorherbestimmten Bezugslagen für die Markierungen mittels eines Computers (9).

13. Verfahren nach einem der Ansprüche 1-12, **gekennzeichnet durch** das Ausführen einer Korrektur der Lage der Schicht oder Schichten (2) aus Fasermaterial mittels einer Vorrichtung (5) für die Anfangspositionierung der Schichten aus Fasermaterial in dem Formwerkzeug (1).

14. System zum Herstellen eines faserverstärkten Windkraftanlagenflügels und zum Überwachen und Kontrollieren, dass mehrere Schichten aus Fasern umfassendem Material zum Herstellen dieses Teils korrekt in einem Formwerkzeug für das Teil und/oder korrekt relativ zueinander in dem Formwerkzeug positioniert sind,
wobei das System, während jede Schicht (2) aus Fasermaterial mit der mindestens einen Markierung (7) versehen wird und während die Schichten aus Fasermaterial übereinander oder nebeneinander oder mit überlappenden Rändern in dem Formwerkzeug (1) positioniert werden, Folgendes umfasst:
ein Mittel (8) zum Bestimmen der Lage jeder Markierung (7) auf jeder Schicht (2) aus Fasermaterial in dem Formwerkzeug (1) und/oder der Lagen der Markierungen auf verschiedenen Schichten aus Fasermaterial relativ zueinander,
ein Mittel (9) zum Vergleichen der bestimmten Lage jeder Markierung (7) auf jeder Schicht (2) aus Fasermaterial in dem Formwerkzeug (1) und/oder der Lagen der Markierungen auf verschiedenen Schichten aus Fasermaterial relativ zueinander mit vorherbestimmten Bezugslagen für die Markierungen für das herzustellende Teil, und
ein Mittel (5) zum Ausführen einer Korrektur der Lage derjenigen Schicht oder Schichten (2) aus Fasermaterial, für die die bestimmten Lagen für die Markierungen (7) darauf und die vorherbestimmten Bezugslagen für die Markierungen nicht miteinander übereinstimmen, **dadurch gekennzeichnet, dass**
das System ein Mittel zum Aufbringen der Schichten (2) aus Fasermaterial von einer Rolle (3) umfasst, wobei jede Schicht (2) aus Fasermaterial mit mindestens einer Markierung (7) versehen ist, die als eine oder mehr gestrichelte oder durchgezogene Linien auf den Schichten (2) aus Fasermaterial benachbart einem oder beiden der Längsränder jeder Schicht aus Material bereitgestellt wird.

15. System nach Anspruch 14, **dadurch gekennzeichnet, dass** es sich bei dem Mittel zum Bestimmen der Lagen der Markierungen (7) auf den Schichten (2) aus Fasermaterial um eine Kamera (8) handelt.

16. System nach Anspruch 14, **dadurch gekennzeichnet, dass** es sich bei dem Mittel zum Bestimmen der Lagen der Markierungen (7) auf den Schichten (2) aus Fasermaterial um einen Laser handelt.

17. System nach einem der Ansprüche 14-16, **dadurch gekennzeichnet, dass** es sich bei dem Mittel zum Vergleichen der bestimmten Lagen der Markierungen (7) auf den Schichten (2) aus Fasermaterial mit vorherbestimmten Bezugslagen für die Markierungen für das herzustellende Teil um einen Computer (9) handelt.

18. System nach einem der Ansprüche 14-17, **dadurch gekennzeichnet, dass** es sich bei dem Mittel zum Ausführen einer Korrektur der Lage derjenigen Schicht oder Schichten (2) aus Fasermaterial, für die die bestimmten Lagen für die Markierungen (7) darauf und die vorherbestimmten Bezugslagen für die Markierungen nicht miteinander übereinstimmen, um eine Vorrichtung (5) handelt, mittels derer die Schichten aus Fasermaterial anfänglich in der Form (1) positioniert werden.

## Revendications

1. Procédé de fabrication d'une pale d'éolienne renforcée par des fibres comprenant la surveillance et le contrôle comme quoi une pluralité de couches de matériau comportant des fibres pour la fabrication de ladite pale d'éolienne sont placées correctement dans un moule pour ladite pièce et/ou correctement les unes par rapport aux autres dans ledit moule, dans lequel les couches sont mises en oeuvre sur le moule en provenance d'un cylindre (3), et dans lequel
après avoir fourni à chaque couche (2) de matériau fibreux au moins un repère (7) et lors de la mise en place des couches de matériau fibreux les unes sur les autres ou les unes à côté des autres ou avec des bords se chevauchant dans le moule (1), le procédé comporte :
l'étape consistant à déterminer la position dans le moule (1) de chaque repère (7) sur chaque couche (2) de matériau fibreux et/ou les positions des repères sur différentes couches de matériau fibreux les unes par rapport aux autres,
l'étape consistant à comparer la position déterminée dans le moule (1) de chaque repère (7) sur chaque couche (2) de matériau fibreux et/ou les positions des repères sur lesdites différentes couches de matériau fibreux les unes par rapport aux autres et des positions de référence prédéterminées pour lesdits repères pour la pièce devant être fabriquée, et
l'étape consistant à effectuer une correction de la position de cette couche ou de ces couches (2) de matériau fibreux pour lesquelles les positions déterminées pour les repères (7) sur celles-ci et les positions de référence prédéterminées pour lesdits repères ne correspondent pas les unes par rapport aux autres, **caractérisé en ce que** les repères (7) sont mis en oeuvre sous la forme d'une ou de plusieurs lignes en trait discontinu ou continu sur les couches (2) de matériau fibreux adjacentes par rapport à l'un des bords longitudinaux ou aux deux de chaque couche de matériau.

2. Procédé selon la revendication 1, **caractérisé par** l'exécution dudit procédé sans interruption de la fabrication de la pièce devant être fabriquée.

3. Procédé selon la revendication 1, **caractérisé par** l'exécution dudit procédé après toute interruption de la fabrication de la pièce devant être fabriquée.

4. Procédé selon la revendication 2, **caractérisé par** l'exécution dudit procédé de manière continue pendant et/ou après la mise en place de chaque couche de matériau fibreux.

5. Procédé selon la revendication 2 ou la revendication 3, **caractérisé par** l'exécution dudit procédé après la mise en place de chaque couche de matériau fibreux.

6. Procédé selon l'une quelconque des revendications 1 à 5, **caractérisé par** l'exécution dudit procédé de manière automatique.

7. Procédé selon l'une quelconque des revendications 1 à 6, **caractérisé par** l'impression ou la pulvérisation des repères (7) sur les couches (2) de matériau fibreux.

8. Procédé selon l'une quelconque des revendications 1 à 7, **caractérisé par** la conception des repères (7) sur les couches (2) de matériau fibreux sous la forme d'une ou de plusieurs lignes en trait discontinu ou continu en différentes couleurs.

9. Procédé selon l'une quelconque des revendications 1 à 8, **caractérisé par** la réalisation des repères (7) sur les couches (2) de matériau fibreux à partir de fils tissés dans le matériau desdites couches.

10. Procédé selon l'une quelconque des revendications 1 à 9, **caractérisé par** la détermination des positions des repères (7) sur les couches (2) de matériau fibreux au moyen d'une caméra (8).

11. Procédé selon l'une quelconque des revendications 1 à 9, **caractérisé par** la détermination des positions des repères (7) sur les couches (2) de matériau fibreux au moyen d'un laser.

12. Procédé selon l'une quelconque des revendications 1 à 11, **caractérisé par** la comparaison des positions déterminées des repères (7) sur les couches (2) de matériau fibreux et des positions de référence prédéterminées pour lesdits repères au moyen d'un ordinateur (9).

13. Procédé selon l'une quelconque des revendications 1 à 12, **caractérisé par** l'exécution d'une correction de la position de ladite couche ou desdites couches (2) de matériau fibreux au moyen d'un appareil (5) pour la mise en place initiale des couches de matériau fibreux dans le moule (1).

14. Système de fabrication d'une pale d'éolienne renforcée par des fibres et de surveillance et de contrôle comme quoi une pluralité de couches de matériau comportant des fibres pour la fabrication de ladite pièce sont placées correctement dans un moule pour ladite pièce et/ou correctement les unes par rapport aux autres dans ledit moule,
dans lequel ledit système comporte, alors que chaque couche (2) de matériau fibreux comporte ledit au moins un repère (7) et alors que les couches de matériau fibreux sont placées les unes sur les unes sur les autres ou les unes à côté des autres ou avec des bords se chevauchant dans le moule (1),
un moyen (8) servant à déterminer la position dans le moule (1) de chaque repère (7) sur chaque couche (2) de matériau fibreux et/ou les positions des repères sur différentes couches de matériau fibreux les unes par rapport aux autres,
un moyen (9) servant à comparer la position déterminée dans le moule (1) de chaque repère (7) sur chaque couche (2) de matériau fibreux et/ou les positions des repères sur lesdites différentes couches de matériau fibreux les unes par rapport aux autres et des positions de référence prédéterminées pour lesdits repères pour la pièce devant être fabriquée, et,
un moyen (5) servant à effectuer une correction de la position de cette couche ou de ces couches (2) de matériau fibreux pour lesquelles les positions déterminées pour les repères (7) sur celles-ci et les positions de référence prédéterminées pour lesdits repères ne correspondent pas les unes par rapport aux autres, **caractérisé en ce que** le système comporte un moyen servant à appliquer les couches (2) de matériau fibreux en provenance d'un cylindre (3), dans lequel chaque couche (2) de matériau fibreux comporte au moins un repère (7) mis en oeuvre sous la forme d'une ou de plusieurs lignes en trait discontinu ou continu sur les couches (2) de matériau fibreux adjacentes par rapport à l'un des bords longitudinaux ou aux deux de chaque couche de matériau.

15. Système selon la revendication 14, **caractérisé en ce que** ledit moyen servant à déterminer les positions des repères (7) sur les couches (2) de matériau fibreux est une caméra (8).

16. Système selon la revendication 14, **caractérisé en ce que** ledit moyen servant à déterminer les positions des repères (7) sur les couches (2) de matériau fibreux est un laser.

17. Système selon l'une quelconque des revendications 14 à 16, **caractérisé en ce que** ledit moyen servant à comparer les positions déterminées des repères (7) sur les couches (2) de matériau fibreux et des positions de référence prédéterminées pour lesdits repères pour la pièce devant être fabriquée est un ordinateur (9).

18. Système selon l'une quelconque des revendications 14 à 17, **caractérisé en ce que** ledit moyen servant à exécuter une correction de la position de cette couche ou de ces couches (2) de matériau fibreux pour lesquelles les positions déterminées pour les repères (7) sur celles-ci et les positions de référence prédéterminées pour lesdits repères ne correspondent pas les unes par rapport aux autres, est un appareil (5) au moyen duquel les couches de matériau fibreux sont initialement mises en place dans le moule (1).
